# EUROPEAN PATENT APPLICATION

(11) **EP 1 155 908 A1**
(43) Date of publication of application: **21.11.2001**
(21) Application number: 01304185.0
(22) Date of filing: 09.05.2001
(51) Int. Cl.: B60Q 1/14, B60Q 1/076, F21V 14/04

(54) **A headlight for motor vehicles**

(30) Priority: 09.05.2000 CZ 168900
(71) Applicant: AUTOPAL S.R.O., Novy Jicin 741 01 (CZ)
(72) Inventor: Strambersky, Libor, Senov U Noveho Jicina 742 42 (CZ); Cejnek, Milan, Novy Jicin 741 01 (CZ); Olivik, Marek, Prerov 750 02 (CZ)
(74) Representative: Godwin, Edgar James

(57) **Abstract**

A headlight for motor vehicles of a reflector or projector design, which headlight is provided with at least one low beam light chamber (1) for the low beam and at least one high beam light chamber (3) for the high beam, where in the low beam mode the light rays are coming out only from the low beam light chambers (1) serving for the low beam light and in the high beam mode both the high beam light chambers (3) for the high beam and the low beam light chambers (1) for the low beam are used, whereby, the direction of the out coming rays is optimised by common swing of the light chambers (1) (3) around an adjusting headlight axis (6) which swing is controlled by an adjusting action member (5).

## Description

### Field of the Invention

The present invention relates to a headlight of reflector or projector design which headlight comprises at least one light chamber for the low beam and further provided with at least one light chamber for a high beam.
In the low beam mode of operation, light rays come out of the light chambers serving for the low beam only. In the high beam mode of operation both the light rays coming out of the light chambers for the high beam and those coming out of the light chambers for the low beam are used, whereby the direction of the out coming rays is optimised by common swing of the light chambers around the adjusting axis of said headlight.

### Background of the Invention

In a headlight provided with a discharge source of light and used for producing the low beam the change in the mode of operation from the low beam to the high beam mode is solved by means an additional static light chamber provided with a halogen light source, eventually any other mechanical movement of the optical element serving as the discharge source of light, the screen, the reflector, eventually of a part of the reflector towards the whole headlight (Patents US 5,769,525, DE 19 741 377, DE 19 710 632). A disadvantage of such solutions is the use of additional action members, their incorporation in a headlight, the headlight weight increase, greater inclination to the system malfunction and an increased total weight of such a headlight. Another matter worth to be mentioned is the use of a discharge light source as a headlight flasher because a frequent use of this light source shortens its service life. At present, this function is solved by an additional light chamber, which chamber is also used in the high beam mode. In this view, the most suitable solution of the high beam mode optimisation seems to be the use of an adjusting action member which adjusting member has to be a part of an automatic adjusting system in case any discharge source of light is used. This automatic adjusting system comprises sensors evaluating vehicle inclination angle, a processor evaluating the input signals from sensors and an adjusting action member. The adjusting action member swings the whole reflector around a pivot point to maintain the correct adjustment of the vertical inclination of the low beam light boundary so as it is required according to a directive.

### Summary of the Invention

The disadvantages of the additional external action members in headlights are removed in a headlight according to the present invention. The headlight comprises light chambers of approximately parabolic or approximately elliptic shapes for low beam and high beam modes, a shade, a lens, in case of using an elliptic shape reflector, light sources, an adjusting action member and an automatic adjusting system allowing to change vertical adjustment of said reflector for the purpose of a correct adjustment of said headlight according to the directive on low beam characteristics.

Inside both light chambers, light sources are situated in proximity of their optical axes, which light sources are firmly fixed with regard to the reflectors. Both light chambers are firmly fixed one to the other, eventually, they form one body and they are together adjustable by an adjusting action member, for example by a stepping motor. The optical axis of the high beam light chamber is inclined with regard to the optical axis of the low beam light chamber, whereby the axes form a predetermined fixed angle in the range from 0.2 to 3 degrees.

In the low beam mode the light beam is oriented divergently below a significant light-darkness border, whereby this border is inclined below the horizontal plane by a predetermined angle prescribed by the respective ECE directive. Inclination of this border with respect to the horizontal plane is maintained as constant by means of a system of automatic adjustment.

For the high beam mode the low beam light chamber and simultaneously also the high beam light chamber are used. The light beam coming out of the high beam light chamber is roughly collimated.

For a better optimisation of the whole high beam, it is necessary to adjust both light chambers so that the optical axis of the high beam light source is approximately parallel with the road surface. By this optimisation, a change can be made in the inclination of the light-darkness border of the low beam, especially then by adjusting of the light-darkness border above the horizontal plane. Thereby, a better reach of the road illumination, a decreased road foreground and a better illumination of the road sides by a wide-angle diffraction of the low beam light can be obtained. Adjustment of both light chambers of the headlight is carried out by the same action member which member is used for the purpose of a correct adjustment of the headlight for the low beam mode. The automatic adjustment system can work both in the low beam and the high beam modes. Optimisation of the high beam mode is carried out by moving the adjusting action member only, which member allows adjustment of both light chambers. The headlight alone does not contain any additional parts beyond the ones, usually used in the prior art discharge headlight designs. Only a software and hardware modification of the automatic adjusting system takes place, whereby, the control of the adjusting action member is influenced.

The halogen light source can be switched on simultaneously with the switching on of the high beam mode followed by adjustment of the light chambers or during or at the end of the light chambers adjustment.

### Brief Description of the Drawings

The invention in its various aspects will now be described with reference to a drawing thereof, in which:

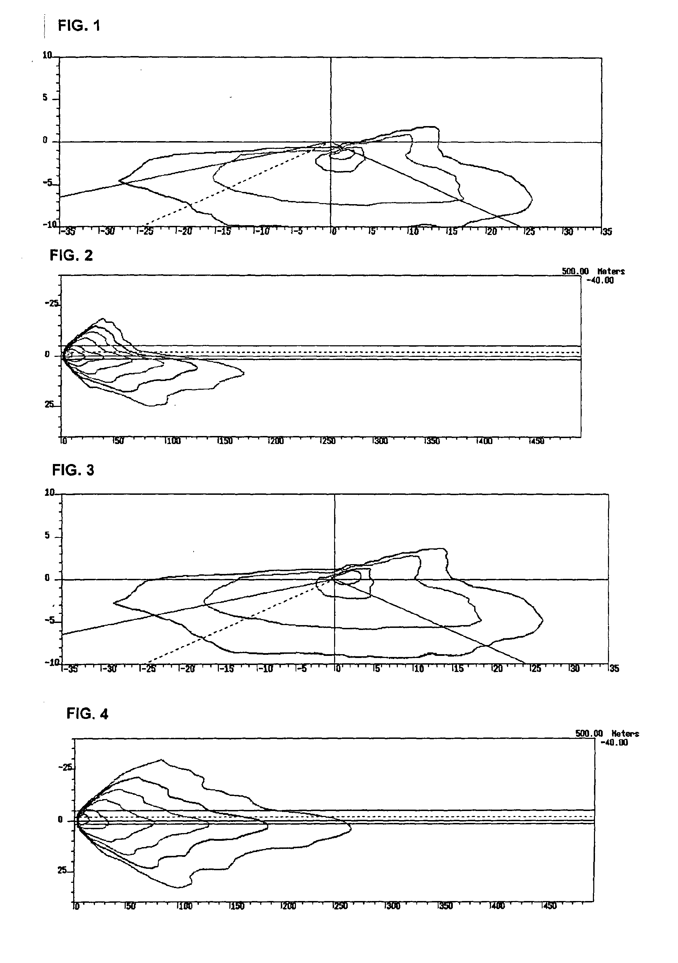

Figure 1 and 2 show isolux maps of light beams coming out of the light chambers with a discharge light source on a measuring wall and projections on a road where the light-darkness boundary is inclined below the horizontal plane;
Figure 3 and 4 show isolux maps of light beams coming out of the light chambers with a discharge light source on a measuring wall and projections on a road, whereby, the light chamber of said discharge light source is adjusted so that the light-darkness boundary of the low beam is above said horizontal plane;

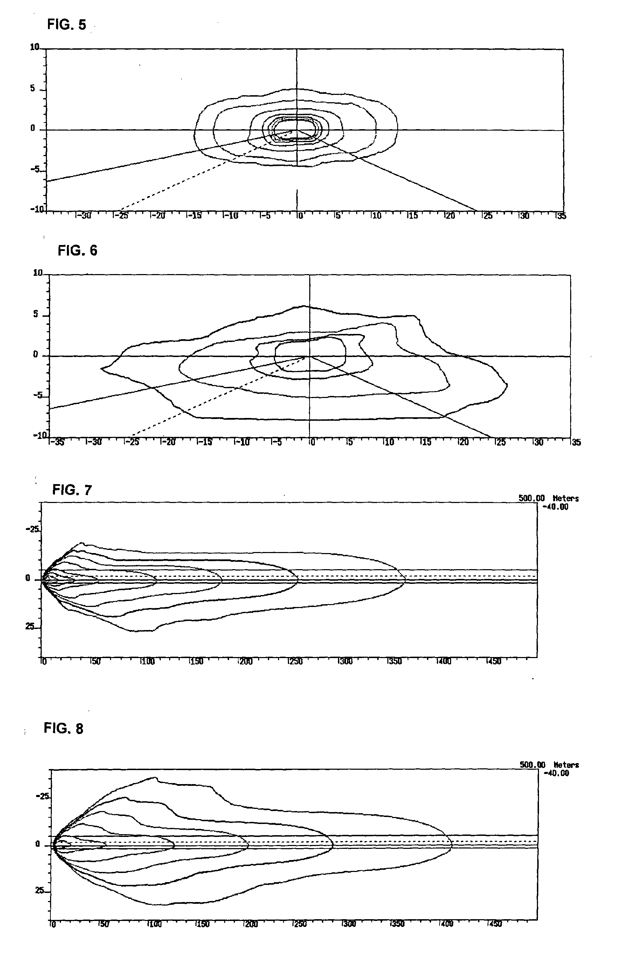

Figure 5 shows an isolux map of a light beam coming out of a light chamber with a halogen light source in an adjusted state;
Figure 6 shows a totalled isolux map of a discharge and a halogen light beams in an adjusted state;
Figure 7 shows an isolux map of projection on a road of the prior art discharge headlights without any optimisation of the light chamber with a discharge light source;
Figure 8 shows an isolux map of projection on a road of discharge headlights with optimisation of the light chamber with a discharge light source according to the present invention, and
Figure 9 shows a headlight with two light chambers and with two kinds of light source.

### Detailed Description of the Invention

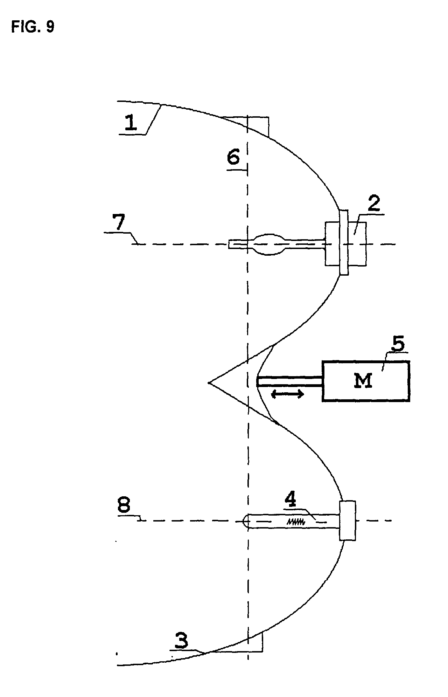

Fig. 9 shows a mechanical scheme of a headlight in top view.

The headlight comprises a discharge beam light chamber 1, a halogen beam light chamber 3, a discharge light source 2, a halogen light source 4, and an adjusting action member 5 for adjusting of a correct vertical headlight adjustment. The discharge beam light chamber 1 and the halogen beam light chamber 3 are adjustable around an adjusting headlight axis 6. Fig. 9 shows also the discharge beam light chamber optical axis 7 of the discharge beam light chamber 1 and the halogen beam light chamber optical axis 8 of the halogen beam light chamber 3. A discharge light source 2 is fixed in the discharge beam light chamber 1 near the discharge beam light chamber optical axis 7, and a halogen light source 4 is fixed in the halogen beam light chamber 3 near the halogen beam light chamber optical axis 8.

The discharge light source 2 is used in both modes, the low one and the high beam one. The halogen light source 4 is used in the high beam and the flasher modes. Discharge beam light chamber 1 and the halogen beam light chamber 3 are firmly fixed together or they form one integral body and they are together adjustable by the action of an adjusting action member 5. An embodiment of such adjusting action member 5 may be a stepping motor.

The halogen beam light chamber optical axis 8 of a halogen beam light chamber 3 with a halogen light source 4 is inclined at a predetermined fixed angle with the discharge beam light chamber optical axis 7 of the discharge beam light chamber 1 with a discharge light source 2

In the low beam mode operation, when the discharge beam light chamber 1 provided with a discharge light source 2 is used, the light beam produced runs divergently below a distinct light-darkness border, whereby, this border is inclined below the horizontal plane. The inclination of this boundary to the horizontal plane is kept constant by means of an automatic adjustment.

The high beam mode of operation uses simultaneously the discharge beam light chamber 1 with a discharge light source 2 and the halogen beam light chamber 3 with the halogen light source 4. The light beam coming out of the halogen beam light chamber 3 provided with a halogen light source 4 is roughly collimated.

For a better optimisation of the total high beam light it is necessary to adjust both the discharge beam light chamber 1 and the halogen beam light chamber 3 so that the halogen beam light chamber optical axis 8 of the halogen beam light chamber 3 with a halogen light source 4 is approximately parallel with the road surface. By this optimisation a change in the inclination of the light-darkness boundary of the low beam is obtained, and mainly adjusting of the light-darkness boundary above the horizontal plane, whereby a better reach of road illumination is obtained, decrease of the foreground on the road and a better illumination of the road sides by a wide-angle diffusion of the low beam.

Both the discharge beam light chamber 1 and the halogen beam light chamber 3 of the headlight according to the invention is carried out by the same adjusting action member 5, which adjusting action member 5 is used for the purpose of a correct adjustment of said headlight for the low beam mode. An automatic adjusting system can operate both in the low beam and the high beam modes. An optimisation of the low beam operation is carried out only by a movement of the adjusting action member 5, which movement allows adjustment of both light chambers, the discharge beam light chamber 1 and the halogen beam light chamber 3. The headlight itself does not comprise any other parts then those the commonly used in the prior art discharge headlights. Only a software and hardware modification of the automatic adjusting system for control of the adjusting action member is made.

## Claims

1. A headlight for motor vehicles for the low beam and the high beam modes provided with at least one low beam light chamber (1) and at least one high beam light chamber (3) operated as an auxiliary light to the low beam light, **characterised in that** both said low beam light chamber (1) and said high beam light chamber (3) are adjusted around an adjusting headlight axis (6) for the high beam mode by means of an adjusting action member (5) of said headlight.

2. A headlight of Claim 1 **characterized in that** the swing angle of said light chambers (1), (3) for the high beam mode is in the range from 0.2 to 3 degrees.

3. A headlight of Claim 1 **characterized in that** said adjusting headlight axis (6) is a horizontal axis.

4. A headlight of Claim 1 **characterized in that** said low beam light chamber (1) and said high beam light chamber (3) are firmly fixed together or form an integral body.

5. A headlight of Claim 1 **characterized in that** said adjusting action member (5) is a part of an automatic adjusting system.

6. A headlight of Claim 1 **characterized in that** a halogen light source (4) is provided for being switched on with a delay after said high beam light source has been switched on.

7. A headlight of Claim 1 **characterized in that** the low beam light source (2) is a discharge light source or a halogen bulb.

8. A headlight of Claim 1 **characterized in that** the high beam light source (4) is a discharge light source or a halogen bulb.
